# EUROPÄISCHE PATENTANMELDUNG

(11) **EP 2 390 862 A2**
(43) Veröffentlichungstag der Anmeldung: **30.11.2011**
(21) Anmeldenummer: 11004224.9
(22) Anmeldetag: 23.05.2011
(51) Int. Cl.: G08G 1/16, B60K 31/00

(54) **Verfahren zur Steuerung des Betriebs eines vollautomatischen, zur unabhängigen Fahrzeugführung ausgebildeten Fahrerassistenzsystems eines Kraftfahrzeugs und Kraftfahrzeug**

(30) Priorität: 26.05.2010 DE 102010021591
(71) Anmelder: Audi AG, 85045 Ingolstadt (DE); Volkswagen AG, 38436 Wolfsburg (DE)
(72) Erfinder: Hörwick, Markus, 81379 München (DE); Siedersberger, Karl-Heinz, Dr., 85049 Ingolstadt (DE); Prosser, Thomas, 83052 Bruckmühl (DE)
(74) Vertreter: Thielmann, Frank

(57) **Zusammenfassung**

Verfahren zur Steuerung des Betriebs eines vollautomatischen, zur unabhängigen Fahrzeugführung ausgebildeten Fahrerassistenzsystems eines Kraftfahrzeugs, wobei ein Plausibilitätsüberwachungsmodul unter insbesondere aussdiließlicher Berücksichtigung von von wenigstens einem Sensor und/oder Fahrzeugsystem ermittelten, den aktuellen Betriebszustand des Kraftfahrzeugs beschreibenden Egodaten und Umfelddaten, insbesondere von den auch zur Ermittlung der Fahrzeugsführungsaktionen des Fahrerassistenzsystems verwendeten Eingangsdaten, überprüft, ob wenigstens ein im Hinblick auf die Funktion des Fahrerassistenzsystems ausgeschlossener Fehlerfall vorliegt, wobei bei Vorliegen eines Fehlerfalls ein wenigstens einen zur Überführung des Kraftfahrzeugs in einen sicheren Zustand, insbesondere den Stillstand, dienenden Fahreingriff umfassender Aktionsplan, der einen zeitlichen Ablauf von Steuerungsbefehlen für Fahrzeugsysteme enthält, ausgeführt wird.

## Beschreibung

Die Erfindung betrifft ein Verfahren zur Steuerung des Betriebs eines vollautomatischen, zur unabhängigen Fahrzeugführung ausgebildeten Fahrerassistenzsystems eines Kraftfahrzeugs sowie ein zugehöriges Kraftfahrzeug.

Im Stand der Technik sind viele Fahrerassistenzsysteme bekannt, bei denen die Fahrzeugführung, also die Längs- bzw. Querregelung, teils durch den Fahrer, teils durch das Fahrerassistenzsystem erfolgt. Beispiele für solche Fahrerassistenzsysteme sind Längsführungssysteme, beispielsweise ACC (automatic cruise control) und Stop-and-Go-Systeme, Querführungssysteme, die ein Spurmittenführungssystem aufweisen, oder auch Spurhalteassistenten. Die Überwachung der vom Kraftfahrzeug durchgeführten Aktionen und Fahrmanöver liegt bei solchen Fahrerassistenzsystemen weiter beim Fahrer, der das Fahrerassistenzsystem und dessen Handlungen laufend beobachtet.

Aktuell richtet sich die Entwicklung von Fahrerassistenzsystemen hauptsächlich auf sogenannte vollautomatische Fahrerassistenzsysteme, die die Fahrzeugführung (innerhalb definierter Grenzen) vollständig übernehmen sollen. Ein entsprechendes Beispiel ist der sogenannte Stauassistent. Diese Systeme haben beispielsweise zum Ziel, dem Fahrer im Stau, also bei Geschwindigkeiten kleiner als 60 km/h, sowohl die Längsführung bezüglich des Vorderfahrzeugs als auch die Querführung innerhalb der eigenen Spur abzunehmen. Ein anderes Beispiel sind automatische Einparksysteme oder dergleichen, letztlich werden jedoch solche vollautomatischen Fahrerassistenzsysteme für verschiedene, auch bei höheren Geschwindigkeiten anzuwendende Fälle entwickelt.

Da vollautomatische Fahrerassistenzsysteme dem Fahrer die komplette Fahraufgabe (Längs- und Querführung) über einen längeren Zeitraum vollständig abnehmen, besteht die Möglichkeit, dass sich der Fahrer nach einiger Zeit von der Fahraufgabe zurückziehen und Nebenbeschäftigungen nachgehen wird. Dies hat zur Folge, dass er im Falle einer sogenannten Fahrerübernahmeaufforderung, wenn also bestimmte Systemgrenzen erreicht sind und der Fahrer selbst wieder die Kontrolle über das Kraftfahrzeug erhalten soll, nicht oder nicht schnell genug in adäquater Weise reagieren kann. Auf diese Weise würde - anders als bei teilautomatischen Fahrerassistenzsystemen - der Fahrer, da er nicht fahrübernahmebereit ist, nicht mehr als Rückfallebene fungieren können.

Systemgrenzen eines vollautomatischen Fahrerassistenzsystems sollen im Verständnis der vorliegenden Erfindung nicht nur die Funktionsgrenzen, also der der Spezifikation zu entnehmende Einsatzbereich (bei Stauassistenzsystemen beispielsweise die Grenzgeschwindigkeit oder das Verlassen bestimmter Umgebungen, wie beispielsweise einer Autobahn), sein, sondern auch beispielsweise Systemausfälle/Systemfehler oder externe Einflüsse, wie beispielsweise das Öffnen einer Tür durch den Fahrer. Bei allen derartigen Vorgängen, wenn mithin eine Übernahmebedingung erfüllt ist, werden bekannte, vollautomatische Fahrerassistenzsysteme den Fahrer auffordern, die Fahrzeugführung, also die Längs- bzw. Querregelung, wieder zu übernehmen. Dies kann beispielsweise dadurch erkannt werden, dass der Fahrer das Lenkrad und/oder die Pedalerie betätigt. Dann kann das vollautomatische Fahrerassistenzsystem wieder deaktiviert werden. Üblicherweise wird dem Fahrer bei einer Fahrerübernahmeaufforderung ein entsprechender optischer und/oder akustischer und/oder haptischer Hinweis gegeben, beispielsweise eine deutliche Anzeige auf einer Kombinationsanzeige, eine Sprachansage, ein Vibrieren des Lenkrads oder dergleichen. Ist der Fahrer in einer solchen Situation, insbesondere einer kritischen Situation wie einem Systemausfall oder dergleichen, nicht in der Lage, schnell die Fahrzeugführung wieder zu übernehmen, können Sicherheitsprobleme, insbesondere Unfälle, auftreten.

Insbesondere ist der Fahrer jedoch, sofern er nicht auf das Verkehrsgeschehen achtet, beispielsweise, falls er einer Nebentätigkeit nachgeht, nicht in der Lage, kritische Situationen, die beispielsweise aus einem Funktionsfehler des Fahrerassistenzsystems herrühren oder von einem anderen Verkehrsteilnehmer ausgelöst werden, beispielsweise verlorene Ladung oder dergleichen, zu erkennen und die Fahrzeugführung korrigierend zu übersteuern. Die Folge können auch hier Sicherheitsprobleme, im schlimmsten Falle Unfälle wie Kollisionen sein.

In der nachveröffentlichten deutschen Anmeldung mit dem Aktenzeichen DE 10 2009 050 399.4 wurde vorgeschlagen, ein Fahrerassistenzsystem mit internen Eigendiagnosemöglichkeiten zu versehen und automatische Rückfallebenen vorzusehen, wenn der Fahrer eine Fahrerübernahmeaufforderung nicht annimmt oder die Situation sehr kritisch ist.

Der Erfindung liegt daher die Aufgabe zugrunde, ein Steuerungsverfahren für vollautomatische Fahrerassistenzsysteme anzugeben, welches auch bei nicht als Rückfallebene zur Verfügung stehendem Fahrer im Falle einer kritischen Verkehrssituation dennoch gestattet, hinreichende Sicherheit zu bieten.

Zur Lösung dieser Aufgabe ist bei einem Verfahren der eingangs genannten Art erfindungsgemäß vorgesehen, dass ein Plausibilitätsüberwachungsmodul unter insbesondere ausschließlicher Berücksichtigung von von wenigstens einem Sensor und/oder Fahrzeugsystem ermittelten, den aktuellen Betriebszustand des Kraftfahrzeugs beschreibenden Egodaten und Umfelddaten, insbesondere von den auch zur Ermittlung der Fahrzeugsführungsaktionen des Fahrerassistenzsystems verwendeten Eingangsdaten, überprüft, ob wenigstens ein im Hinblick auf die Funktion des Fahrerassistenzsystems ausgeschlossener Fehlerfall vorliegt, wobei bei Vorliegen eines Fehlerfalls ein wenigstens einen zur Überführung des Kraftfahrzeugs in einen sicheren Zustand, insbesondere den Stillstand innerhalb der eigenen Fahrspur, dienenden Fahreingriff umfassender Aktionsplan, der einen zeitlichen Ablauf von Steuerungsbefehlen für Fahrzeugsysteme enthält, ausgeführt wird.

Die Erfindung schlägt also vor, ein Überwachungssystem zu entwerfen, hier das Plausibilitätsüberwachungsmodul, welches letztlich die Überwachungsaufgabe des Fahrers unterstützen beziehungsweise übernehmen kann. Das funktionale Verhalten des Fahrerassistenzsystems muss aus mehreren Gründen plausibilisiert werden, zum einen, da nicht mit absoluter Sicherheit gewährleistet werden kann, dass die Module des Fahrerassistenzsystems, die aufbauend auf den gegebenenfalls als Umfeldmodell aufbereiteten Eingangsdaten das funktionale Verhalten des Fahrerassistenzsystems generieren, fehlerfrei arbeiten. Zum anderen können unplausible und somit kritische Situationen auch durch das Verhalten anderer Verkehrsteilnehmer, beispielsweise zwischen den Spuren fahrender Motorräder, verlorene Ladung oder dergleichen, erzeugt werden. Das Plausibilitätsbewachungsmodul der vorliegenden Erfindung überprüft, ob sich das Kraftfahrzeug nach der gegebenen Definition des Fahrerassistenzsystems plausibel verhält oder ob es in eine insbesondere kritische Situation geraten ist, die nach der Definition des vollautomatischen Fahrerassistenzsystems nicht hätte vorkommen dürfen, also ein Fehlerfall vorliegt. Es geht also bei der vorliegenden Erfindung letztlich um Abweichungen von einem per Definition des Fahrerassistenzsystems erwarteten Verhalten, welche durch den Abgleich der Eigenbewegung des Kraftfahrzeugs (Egodaten), die ja ein Resultat der Ausgangsdaten des Fahrerassistenzsystems ist, und der Umfelddaten ermittelt wird.

Was Fehler des Fahrerassistenzsystems betrifft, kann das Plausibilitätsüberwachungsmodul also insbesondere Fehlerfälle auffinden, die dann auftreten, wenn die Eigendiagnose nicht mehr greift. Dabei wird mit besonderem Vorteil ausschließlich das von außen beobachtbare funktionale Verhalten betrachtet, also das letztliche Ergebnis des Wirkens des Fahrerassistenzsystems in Form der Eigendynamik, also des Betriebszustandes, des Kraftfahrzeugs relativ zur Umgebung. Als Eingangsdaten gehen in das Plausibilitätsüberwachungsmodul dann folglich ausschließlich die Egodaten und die Umfelddaten ein, wobei explizit darauf verzichtet wird, die Ausgangsdaten der Funktion des Fahrerassistenzsystems, also insbesondere Stellgrößen für die verschiedenen Fahrzeugsysteme, die an die Regelung gestellt werden, ebenfalls als Eingangsdaten zu benutzen.

Dies hat mehrere Vorteile und Gründe. Zum einen soll im Rahmen der vorliegenden Erfindung, wie bereits erwähnt, die Plausibilität aus einer Beobachterperspektive betrachtet werden, das bedeutet, dass möglichst wenig Rückgriff auf die Funktionalität des Fahrerassistenzsystem selbst genommen werden soll, um möglichst unabhängig und einfach eine Plausibilitätsüberprüfung vornehmen zu können, die letztlich einer Art "neutralem" Beobachter entspricht. Zudem sind die Ausgangsdaten des Fahrerassistenzsystem extrem stark situationsabhängig. Eine Situationserkennung ist sehr komplex und dadurch fehleranfällig, zudem müssten häufig seitliche Verläufe von Daten berücksichtigt werden. Auf diese Weise würde die Gefahr bestehen, die gerade zu überprüfende Fehleranfälligkeit des Fahrerassistenzsystems auch in die Plausibilitätsüberprüfung einzuführen, was der Gesamtsicherheit nicht zuträglich ist. Mithin schlägt das erfindungsgemäße Verfahren eine einfach zu realisierende Plausibilitätsüberprüfung anhand letztlich nur der Eingangsdaten vor, die auch dem Fahrerassistenzsystem zur Verfügung gestellt werden, wobei diese für die Plausibilitätserkennung als "Ergebnis" des Handelns des Fahrerassistenzsystems aufgefasst und analysiert werden, um Fehlerfälle aufzufinden. Wie durch die im Folgenden noch näher erläuterten Algorithmen des Plausibilitätsüberwachungsmoduls, die die verschiedenen Messdaten auswerten, noch näher erläutert wird, wird letztlich eine überschlagsmäßige Überprüfung der Plausibilität bezüglich der Fehlerfälle angestrebt.

Mit dieser beobachtenden Überprüfung des Ergebnisses des Handelns des Fahrerassistenzsystems werden eine Vielzahl von Vorteilen erreicht, insbesondere jedoch können Funktionen vollautomatischer Fahrerassistenzsysteme realisiert werden, ohne dass eine Überwachung des Fahrerassistenzsystems durch den Fahrer sichergestellt werden muss. Dem Fahrer wird so die Möglichkeit gegeben, die Fahraufgabe an das Fahrerassistenzsystem abzugeben und Nebentätigkeiten, wie beispielsweise e-Mails lesen oder Fernsehen, nachzugehen, während das Kraftfahrzeug selbstgesteuert fährt. Solche vollautomatischen Fahrerassistenzsysteme lassen sich daher ab einem solchen Entwicklungsstand auch als autonome Fahrerassistenzsysteme bezeichnen. Das erfindungsgemäße Verfahren gibt also letztlich eine Möglichkeit zur Realisierung eines autonomen Fahrerassistenzsystems an.

Dies wird durch das Plausibilitätsüberwachungsmodul realisiert, welches das funktionale Verhalten des Fahrerassistenzsystems auf prinzipielle Plausibilität überprüft. Letztlich wird, wie bereits beschrieben, die durch das Fahrerassistenzsystem ausgeführte momentane Aktion (Quer- und Längsführung), die sich in den Egodaten widerspiegelt, in den Kontext mit dem Umfeld, in dem sich das Fahrzeug bewegt (Fahrspurdaten, Objektdaten, dynamische Objekte, statische Hindernisse und Freiräume) gesetzt und überprüft, ob dieses Verhalten einem Fehlerfall entspricht, mithin, ob es sinnvoll sein kann. Der Überwachungsmechanismus kann als allerletzte Kontrollinstanz verstanden werden, da er nur die unmittelbaren Auswirkungen innerhalb der Verhaltensgenerierung aufgetretener und nicht selbstständig erkannter Fehler beobachtet. Dabei stützt sich das Plausibilitätsüberwachungsmodul, wie bereits angesprochen, zweckmäßigerweise auf exakt die gleichen Eingangsdaten wie die Verhaltensgenerierung des Fahrerassistenzsystems. Dabei können die Umfelddaten beispielsweise Daten des statischen Umfelds und/oder Daten des dynamischen Umfelds und/oder Fahrspurdaten umfassen.

Tritt ein solcher Fehlerfall ein, wird erfindungsgemäß ein wenigstens einen zur Überführung des Kraftfahrzeugs in einen sicheren Zustand, insbesondere dem Stillstand, dienenden Fahreingriff umfassender Aktionsplan, der einen zeitlichen Ablauf von Steuerungsbefehlen für Fahrzeugsysteme enthält, ausgeführt. Selbstverständlich kann ein solcher Aktionsplan auch, wie aus dem Stand der Technik bekannt, eine Fahrerübernahmeaufforderung umfassen, es wird jedoch vorgeschlagen, nicht mehr oder nicht mehr allein eine Fahrerübernahmeaufforderung auszugeben, sondern einen Aktionsplan zu verwenden, der Fahreingriffe enthält, die das Kraftfahrzeug auch dann, wenn der Fahrer nicht fahrübernahmebereit ist und als Rückfallebene wegfällt, in einen sicheren Zustand, insbesondere bevorzugt also den Stillstand des Kraftfahrzeugs auf der eigenen Fahrspur, überführen können. Es wird also durch den oder die Fahreingriffe eine weitere Rückfallebene geschaffen, die es ermöglicht, das Kraftfahrzeug ohne Einwirken des Fahrers wieder in einen sicheren Zustand, insbesondere in einen Stillstand, zu überführen. Es sei an dieser Stelle angemerkt, dass ein solcher Aktionsplan nicht nur dann verwendet werden kann, wenn das Plausibilitätsüberwachungsmodul einen Fehlerfall festgestellt hat, sondern selbstverständlich auch, wenn in einem internen Eigendiagnosemodul des Fahrerassistenzsystems festgestellt wird, dass eine Systemgrenze erreicht wird oder dergleichen.

Der Aktionsplan ist dabei ein zeitlicher Ablauf von Steuerungsbefehlen für verschiedene Fahrzeugsysteme. Solche Steuerungsbefehle können beispielsweise eine Kombinationsanzeige zur Ausgabe einer Fahrerübernahmeaufforderung ansprechen, bei einem Fahreingriff könnten durch ein Steuergerät des vollautomatischen Fahrerassistenzsystems beispielsweise unmittelbar oder über entsprechende weitere Steuergeräte die Bremsen und/oder die Lenkung angesteuert werden und dergleichen. Denkbar sind auch Steuerungsbefehle für weitere Fahrzeugsysteme, beispielsweise die Warnblinkanlage. Jeder dieser Steuerungsbefehle ist einem Zeitpunkt beziehungsweise einer Zeitspanne innerhalb des Aktionsplans zugeordnet. Zu diesem Zeitpunkt beziehungsweise während dieser Zeitspanne wird der Steuerungsbefehl ausgeführt.

Es sei an dieser Stelle noch allgemein angemerkt, dass das erfindungsgemäße Verfahren selbstverständlich in allen Ausgestaltungen vollständig automatisch in einem Steuergerät, insbesondere einem dem vollautomatischen Fahrerassistenzsystem zugeordneten Steuergerät, abläuft, ohne dass ein manueller Eingriff des Fahrers erforderlich ist, da es ja schließlich auch das Ziel ist, die Sicherheit des Kraftfahrzeugs möglichst ohne Einwirkung des Fahrers dennoch gewährleisten zu können.

In weiterer Ausgestaltung des erfindungsgemäßen Verfahrens kann vorgesehen sein, dass der Aktionsplan unter Berücksichtigung des Fehlerfalls aus einer Anzahl fest vorgegebener Aktionspläne gewählt und/oder angepasst wird. Der "Fehlerfall" als Ausgabedatum des Plausibilitätsüberwachungsmoduls kann dabei beliebig genau definiert werden und gegebenenfalls auch mit weiteren Daten versehen werden. Es ist also denkbar, dass insbesondere verschiedenen Fehlerfällen zugeordnete Aktionspläne vorgesehen sind, von denen - insbesondere anhand des erfüllten Fehlerfalls - ein entsprechender Aktionsplan ausgewählt wird. Zusätzlich kann im Übrigen auch vorgesehen werden, dass ein Aktionsplan unter Berücksichtigung von die aktuelle Situation beschreibenden Daten angepasst wird. Die die aktuelle Situation beschreibenden Daten, welche insbesondere auch Messdaten verschiedener Sensoren beziehungsweise Sensorsysteme umfassen können, sind nicht nur die Umgebung des Kraftfahrzeugs beschreibende Umgebungsdaten, sondern auch Egodaten des Kraftfahrzeugs, wobei zusätzlich selbstverständlich auch verschiedenste andere Informationen, die innerhalb des Kraftfahrzeugs vorliegen, also die aktuelle Situation beschreibende Daten, berücksichtigt werden können. Besonders relevant sind hier selbstverständlich alle Daten, die die Art des eingetretenen Fehlerfalls betreffen - bei der Auswahl beziehungsweise Anpassung eines Aktionsplans sollte also vorzugsweise die Art des eingetretenen Fehlerfalls berücksichtigt werden.

Der Fahreingriff im Rahmen des Aktionsplans kann beispielsweise aus einer in den sicheren Zustand führenden Rückfalltrajektorie ermittelt werden. Eine solche Rückfalltrajektorie wird üblicherweise eine Längsrückfalltrajektorie umfassen, die die Längsregelung des Kraftfahrzeugs betrifft, also insbesondere beschreibt, wie und zu welchem Zeitpunkt das Kraftfahrzeug in den Stillstand abgebremst werden soll. Zusätzlich können mit besonderem Vorteil auch Querrückfalltrajektorien enthalten sein, die also die Querregelung, mithin also die Lenkung, das Kraftfahrzeug betreffen. Ist eine solche insgesamte Rückfalltrajektorie ermittelt - was im Übrigen auch zeitabschnittsweise geschehen kann -, so können hieraus die entsprechenden, die Fahreingriffe realisierenden Steuerungsbefehle des Aktionsplans bestimmt beziehungsweise angepasst werden, so dass letztlich die Rückfalltrajektorie die Solltrajektorie des in den sicheren Zustand zu überführenden Kraftfahrzeugs darstellt.

Selbstverständlich sind viele weitere vorteilhafte Ausgestaltungen der Aktionspläne als zusätzliche Rückfallebene denkbar, beispielsweise ein modularer Aufbau der Aktlonspläne, welche insbesondere auch durch die bereits genannte nachveröffentlichte deutsche Patentanmeldung DE 10 2009 050 399.4 beschrieben werden.

Wie bereits erwähnt ist es letztlich zum Erreichen einer maximalen Sicherheit notwendig, dass das Plausibilitätsüberwachungsmodul auf der Grundlage einer fehlerfrei funktionierenden Wahrnehmung arbeitet. Das bedeutet, die von Sensoren beziehungsweise anderen Fahrzeugsystemen gelieferten Egodaten und Umfelddaten müssen verlässlich sein. Daher kann zweckmäßigerweise vorgesehen sein, dass ein wenigstens einem Sensor oder Fahrzeugsystem bezüglich der Datenerfassung zugeordnetes Funktionsüberprüfungsmodul verwendet wird, insbesondere wenigstens ein Sensor redundant ausgeführt wird. Insbesondere über das Vorhalten redundanter Sensoren können Fehler in Wahmehmungsmodulen einfach erkannt werden. Es sei angemerkt, dass ein Ausfall eines solchen Wahrnehmungsmoduls beziehungsweise Sensors oder anderen Fahrzeugsystems selbstverständlich auch eine Systemgrenze darstellen kann, die zu einem Überführen des Kraftfahrzeugs gemäß einem Aktionsplan in einen sicheren Zustand führen kann.

In weiterer vorteilhafter Ausgestaltung kann vorgesehen sein, dass zur Überprüfung des Fehlerfalls wenigstens ein wenigstens einen Fehlerfall abdeckender Algorithmus zur Datenauswertung verwendet wird. Wie bereits angedeutet wurde, steigt die Sicherheit im erfindungsgemäßen Verfahren insbesondere dadurch an, dass möglichst vollständig alle auftretenden Fehlerfälle auch erkannt werden können. Dazu können Algorithmen eingesetzt werden, die jeweils einen Teil der möglichen Fehlerfälle abdecken. Um die Fehlerfälle zu identifizieren, die abgedeckt werden müssen, kann als gedankliche Vorarbeit so vorgegangen werden, dass letztlich festgestellt wird, welche allgemeinen Anforderungen an ein plausibles Verhalten des Fahrerassistenzsystems gestellt werden, das bedeutet, welche Normalfälle erwartet werden. Entsprechend kann aus einer solchen Erwartungsabschätzung gefolgert werden, welche Fehlerfälle im Hinblick auf die Funktion des Fahrerassistenzsystem als ausgeschlossen gelten müssen. Sinnvoll ist also eine Analyse und Kategorisierung möglicher auftretender Fehlerfälle, worauf im weiteren Verlauf noch näher eingegangen werden wird.

Zweckmäßigerweise kann als Algorithmus eine Ausweichanalyse verwendet werden, bei welcher die Existenz einer Trajektorie, auf der ohne Kollision zum Stillstand gebremst werden kann, überprüft wird. Es wird durch die Ausweichanalyse folglich überprüft, ob kollisionsfreies Fahren noch möglich ist. Dies ist dann gegeben, wenn mindestens eine Trajektorie existiert, auf der in den Stillstand gebremst werden kann, ohne mit einem Hindernis zusammenzustoßen. Dabei kann beispielsweise zunächst die Länge der längsten freien Trajektorie ermittelt werden und mit dem bei der aktuellen Geschwindigkeit benötigten Bremsweg verglichen werden. Ist der längste freie Weg länger als der Bremsweg, gegebenenfalls unter Hinzunahme eines Sicherheitsabstandes, so kann kollisionsfrei gefahren werden. Derartige Ausweichanalysen werden heutzutage häufig bei sogenannten Notbremsassistenten eingesetzt. In diesem Zusammenhang wurde eine Ausweichanalyse beispielsweise auf dem 10. Braunschweiger Symposium AAET 2010 am 10. und 11. Februar 2010 unter dem Titel "Erweiterte Umfelderkennung und Nutzung einer Ausweichanalyse als Grundlage einer aktiven Gefahrenbremsung" von M. Reichel, M. E. Bouzouraa, A. Siegel, K.-H. Siedersberger und M. Maurer vorgeschlagen. Während die dortige Ausweichanalyse zur Unterstützung des menschlichen Fahrers im Straßenverkehr konzipiert ist, also so parametriert ist, dass sie auf keinen Fall zu früh auslösen darf, geht es im vorliegenden Fall jedoch um Sicherheitsaspekte einer Plausibilitätsüberprüfung, so dass in besonders zweckmäßiger Weiterbildung des erfindungsgemäßen Verfahrens eine Modifikation der Eingangsdaten in eine solche Ausweichanalyse vorgesehen sein kann. So kann, wenn ein Orte als durch ein Objekt belegt, unbekannt oder frei klassifizierendes Umgebungsmodell verwendet wird, vorgesehen sein, dass für die Zwecke der Ausweichanalyse außerhalb der aktuellen Fahrspur des Kraftfahrzeugs liegende und/oder als unbekannt klassifizierte Orte als belegt gekennzeichnet werden. Damit wird mehr Wert auf den Sicherheitsaspekt gelegt. Solche Umgebungsmodelle, häufig auch als Belegungskarten bezeichnet, sind bekannt, wobei ein solches Umfeldmodell neben einer Belegungskarte auch noch weitere Informationsstrukturen umfassen kann. Es sei noch daraufhingewiesen, dass über die Markierung von Gebieten außerhalb der aktuellen Fahrspur als belegt auch ein Spurverlassen durch die Ausweichanalyse detektiert werden kann.

Eine weitere Möglichkeit eines vorteilhaft zu verwendenden Algorithmus ist ein Sicherheitskokonalgorithmus, in dem überprüft wird, ob ein definiertes, um das Kraftfahrzeug befindliches Gebiet frei von Objekten ist. Dies kann besonders vorteilhaft zusätzlich zur Ausweichanalyse verwendet werden, die nicht die Fälle abdeckt, in denen das Fahrzeug seitlich zu nah an einem Hindernis vorbeifährt oder in denen dynamische Objekte dem eigenen Fahrzeug zu nahe kommen. Der "Sicherheitskokon" kann beispielsweise in einem bestimmten Abstand um das Fahrzeug herum gezogen werden. Ist dieser "Sicherheitskokon" nicht frei, befindet sich also ein statisches oder dynamisches Objekt in diesem Bereich, ist ein Fehlerfall gegeben. Beispielsweise kann sich der Kokon in einem Abstand von 50 cm um das Kraftfahrzeug befinden. Es sei noch daraufhingewiesen, dass der Sicherheitskokon nach vorne so ausgelegt werden kann, dass er eine geforderte Lücke für die Sensorik überprüft. Auch hier kann eine Modifikation der Eingangsdaten eines Umgebungsmodells vorgesehen werden, indem als unbekannt klassifizierte Bereiche für die Zwecke des Sicherheitskokonalgorithmus als belegt gekennzeichnet werden. Damit keine Auslösung stattfindet, wenn an den Spurrand gefahren wird, werden allerdings für diesen Fall Gebiete außerhalb der aktuellen Fahrspur nicht verändert.

Als ein insbesondere bei Stauassistenzsystemen nützlich einsetzbarer Algorithmus hat sich ein Zeitlückenalgorithmus erwiesen, in dem überprüft wird, ob sich ein Vorderfahrzeug des Kraftfahrzeugs in einem bestimmten Zeitlückenintervall befindet. Das Zeitlückenintervall kann dabei anhand der gewünschten Funktion des Fahrerassistenzsystems, letztlich also wiederum auch der Erwartung an das Fahrerassistenzsystem, definiert werden. Auf diese Weise kann festgestellt werden, ob dem Vorderfahrzeug noch richtig gefolgt wird oder ob zu wenig oder zu viel Abstand zum Vorderfahrzeug gelassen wird. Dabei kann vorgesehen sein, dass ein kurzfristiges Über-und/oder Unterschreiten des Zeitlückenintervalls gestattet ist, indem die Überprüfung der Zeitlücke mit einer Hysterese versehen wird.

Auch ein Geschwindigkeitsgrenzenalgorithmus kann als Algorithmus vorteilhaft eingesetzt werden, welcher überprüft, ob das Kraftfahrzeug innerhalb eines definierten Geschwindigkeitsintervalls fährt. Während das Geschwindigkeitsintervall selbstverständlich aufgrund von Umgebungsbedingungen, die beispielsweise in Form von Geschwindigkeitsbegrenzungen oder dergleichen einem Navigationssystem entnommen werden können, bestimmt werden kann, kann auch das Geschwindigkeitsintervall letztlich aufgrund der gewollten Funktion des Fahrerassistenzsystems bestimmt werden, beispielsweise bei einem Stauassistenzsystem als zwischen 0 und 60 km/h. Bei Umgebungsbedingungen können beispielsweise eine vorgeschriebene Höchstgeschwindigkeit und/oder eine vorgegebene Mindestgeschwindigkeit berücksichtigt werden. Die Überprüfung im Rahmen eines solchen Algorithmus kann über eine einfache Abfrage der aktuellen Geschwindigkeit des Kraftfahrzeugs, die bei heutigen Kraftfahrzeugen ohnehin abrufbar ist, realisiert werden.

Eine besonders vorteilhafte Ausgestaltung ergibt sich, wie gezeigt werden kann, wenn eine Ausweichanalyse, ein Sicherheitskokonalgorithmus, ein Zeitlückenalgorithmus und ein Geschwindigkeitsgrenzenalgorithmus gleichzeitig realisiert werden, da gezeigt werden kann, dass damit, insbesondere im Fall eines Stauassistenzsystems, alle möglichen Fehlerfälle abgedeckt werden können. Dies sei anhand der folgenden Überlegungen und auch später bezüglich der Figurenbeschreibung näher erläutert.

So kann zunächst das erwartete Verhalten des Kraftfahrzeugs an sich überprüft werden. Ist beispielsweise ein Stauassistenzsystem lediglich für Geschwindigkeiten zwischen 0 und 60 km/h definiert, so liegt bei Verlassen dieses Geschwindigkeitsintervalls, feststellbar anhand der Egodaten, eine Unplausibilität vor. Das erwartete Verhalten des Kraftfahrzeugs ist also, dass es innerhalb seiner erlaubten Geschwindigkeitsgrenzen fährt. Mögliche Fehlerfälle sind, dass das Ego zu schnell oder rückwärts fährt.

Als nächstes soll das Verhalten des Kraftfahrzeugs bezüglich eines Vorderfahrzeugs betrachtet werden. Erwartet wird hierbei beispielsweise, dass das Kraftfahrzeug einen Sensormindestabstand (Sensorlücke) hält, und die Geschwindigkeit auf die Zeitlücke zum Vorderfahrzeug regelt. Mögliche Fehlerfälle sind hier: Unterschreitung des Sensormindestabstands durch das Kraftfahrzeug, zu nahe Kommen des Kraftfahrzeugs longitudinal an das Vorderfahrzeug und zu großer Abstand zum Vorderfahrzeug durch das Kraftfahrzeug. Zusätzlich müssen jedoch Fälle betrachtet werden, in den ein neues Vorderfahrzeug aufgefunden wird, beispielsweise, weil das alte Vorderfahrzeug die aktuelle Fahrspur verlässt. Erwartet wird dann, dass das Kraftfahrzeug die Geschwindigkeit auf Zeitlücke zum neuen Vorderfahrzeug, falls ein solches existiert, regelt, oder dass das Stauassistenzsystem sich deaktiviert, falls kein weiteres Vorderfahrzeug existiert. Mögliche Fehler sind hier: dass das Kraftfahrzeug zu viel Abstand zum Vorderfahrzeug lässt, da nicht rechtzeitig auf das neue Vorderfahrzeug geregelt wird, oder dass das Kraftfahrzeug zu viel Abstand zum Vorderfahrzeug lässt, wenn kein weiteres Vorderfahrzeug existiert und sich das Stauassistenzsystem nicht automatisch deaktiviert.

Weiter betrachtet werden kann das Verhalten des Kraftfahrzeugs bezüglich eines Nebenfahrzeugs, also eines Kraftfahrzeugs im Seitenbereich des eigenen Kraftfahrzeugs. Hierbei wird erwartet, dass keine besondere Reaktion auf ein normal fahrendes Nebenfahrzeug eintritt und das Kraftfahrzeug einen lateralen Sicherheitsabstand zum Nebenfahrzeug hält und in der eigenen aktuell befahrenen Fahrspur bleibt. Mögliche Fehler sind hier, dass das Kraftfahrzeug dem Vorderfahrzeug longitudinal zu nahe kommt, da das falsche Vorderfahrzeug ausgewählt wurde, oder dass das Kraftfahrzeug zu viel Abstand zum Vorderfahrzeug lässt, da das falsche Vorderfahrzeug ausgewählt wurde. Zudem kann das Kraftfahrzeug einem statischen Hindernis lateral zu nahe kommen, da das Fahrerassistenzsystem eine übertriebene oder nicht notwendige Ausweichreaktion anfordert, oder das Kraftfahrzeug kommt dynamischen Hindernissen lateral zu nahe, wobei derselbe Grund vorliegen kann. Schließlich kann eine übertriebene oder nicht notwendige Ausweichreaktion auch zum Verlassen der aktuellen Fahrspur durch das Kraftfahrzeug führen.

Ein weiterer zu betrachtender Punkt ist das Verhalten des Kraftfahrzeugs bezüglich des Einscherens der Kraftfahrzeuge. Zu erwarten ist, dass die Geschwindigkeit zum neuen Vorderfahrzeug auf Zeitlücke geregelt wird. Mögliche Fehlerfälle sind, dass das Kraftfahrzeug den Sensormindestabstand unterschreitet, wenn das falsche Vorderfahrzeug ausgewählt wird, oder aus dem selben Grund das Kraftfahrzeug dem Vorderfahrzeug longitudinal zu nahe kommt.

Auch zu betrachten ist das Verhalten des Kraftfahrzeugs bezüglich der aktuell befahrenen Fahrspur. Erwartet wird hier, dass das Kraftfahrzeug innerhalb der aktuellen Fahrspur fährt. Ein Fehlerfall ist das Verlassen der aktuellen Fahrspur.

Abschließend ist noch das Verhalten des Kraftfahrzeugs bezüglich statischer Hindernisse zu betrachten. Hierbei kann erwartet werden, dass das Kraftfahrzeug auf ein statisches Hindernis bremst, wenn es nicht umfahrbar ist, oder dieses umfährt. Hier können folgende Fehlerfälle auftreten: Das Kraftfahrzeug kann dem statischen Hindernis longitudinal oder lateral zu nahe kommen, da nicht am Hindernis vorbeigelenkt wird. Auch kann zu viel Abstand zum Vorderfahrzeug auftreten, da gebremst wird, obwohl das Hindernis umfahrbar ist. Zudem kann das Kraftfahrzeug einem dynamischen Hindernis und/oder einem statischen Hindernis lateral oder longitudinal zu nahe kommen, wenn eine ungewollte Ausweichreaktion angefordert wird oder nicht oder nicht ausreichend gebremst wird. Schließlich ist auch ein Verlassen der Fahrspur möglich, wenn eine ungewollte Ausweichreaktion angefordert wird.

Letztlich lassen sich die hier beschriebenen Fehlerfälle, lässt man ihre Ursachen beiseite, zu folgenden Fehlerfällen zusammenfassen, wobei weiterhin als Beispiel ein Stauassistenzsystem betrachtet wird:
- das Kraftfahrzeug fährt zu schnell oder rückwärts,
- das Kraftfahrzeug unterschreitet den Sensormindestabstand (Sensorlücke),
- das Kraftfahrzeug kommt einem Vorderfahrzeug longitudinal zu nahe,
- das Kraftfahrzeug lässt zu viel Abstand zum Vorderfahrzeug,
- das Kraftfahrzeug kommt einem dynamischen Hindernis lateral zu nahe
- das Kraftfahrzeug verlässt die Spur,
- das Kraftfahrzeug kommt einem statischen Hindernis longitudinal zu nahe,
- das Kraftfahrzeug kommt einem statischen Hindernis lateral zu nahe.

Dieselbe Betrachtung kann auch für durch andere Verkehrsteilnehmer verursachte Plausibilitätsfehler durchgeführt werden, wobei beispielsweise dynamische Objekte und statische Hindernisse als Situationsaspekte betrachtet werden können, die in verschiedenen Ausprägungen vorliegen können, jedoch auch Fehlergruppen zugeordnet werden können, beispielsweise bei der Ausprägung "Vorderfahrzeug-Vollbremsung" oder "extrem naher Einschervorgang", den Fehlerfällen "das Kraftfahrzeug unterschreitet den Sensormindestabstand" oder "das Kraftfahrzeug kommt dem Vorderfahrzeug longitudinal zu nahe". Motorradfahrer zwischen Kolonnenspuren, Krankenwägen oder dergleichen können beispielsweise auf den Fehlerfall "das Kraftfahrzeug kommt einem dynamischen Hindernis lateral zu nahe" abgebildet werden. Ähnlich kann mit statischen Hindernissen verfahren werden, deren Ausprägungen den Fehlerfällen "das Kraftfahrzeug kommt einem statischen Hindernis longitudinal zu nahe" oder "das Kraftfahrzeug kommt einem statischen Hindernis lateral zu nahe" zugeordnet werden können.

Über die genannten vier Algorithmen lassen sich diese verallgemeinerten Fehlerfälle vollständig abdecken. Der Geschwindigkeitsgrenzenalgorithmus betrifft den Fehlerfall "das Kraftfahrzeug fährt zu schnell oder rückwärts". Der Zeitlückenalgorithmus deckt die Fehlerfälle "das Kraftfahrzeug kommt einem Vorderfahrzeug longitudinal zu nahe" und "das Kraftfahrzeug lässt zu viel Abstand zum Vorderfahrzeug" ab. Der Fehlerfall "das Kraftfahrzeug kommt einem dynamischen Hindernis lateral zu nahe" und der Fehlerfall "das Kraftfahrzeug kommt einem statischen Hindernis lateral zu nahe" können durch den Sicherheitskokonalgorithmus genauso abgedeckt werden wie der Fehlerfall "das Kraftfahrzeug unterschreitet den Sensormindestabstand (Sensorlücke)". Die Ausweichanalyse schließlich deckt die Fehlerfälle "das Kraftfahrzeug kommt dem Vorderfahrzeug longitudinal zu nahe", "das Kraftfahrzeug verlässt die aktuelle Fahrspur und "das Kraftfahrzeug kommt einem statischen Hindernis longitudinal zu nahe" ab. Somit wurde für das Beispiel des Stauassistenzsystems gezeigt, dass die vier beschriebenen Algorithmen in ihrer Gesamtheit die auftretenden Fehlerfälle vollständig abdecken können.

Allgemein kann beim erfindungsgemäßen Verfahren vorteilhaft noch ein weiterer Fehlerfall überprüft werden, der die Nutzung eines autonomen Fahrerassistenzsystems weitgehend ausschließen wird, nämlich das Vorhandensein von Personen auf der aktuellen Fahrspur des Kraftfahrzeugs. So kann vorgesehen sein, dass als Algorithmus ein Personenerkennungsalgorithmus verwendet wird, der auf der aktuellen Fahrspur des Kraftfahrzeugs befindliche Personen erkennt. Auf diese Weise wird auch diesbezüglich die Sicherheit erhöht.

Neben dem Verfahren betrifft die Erfindung auch ein Kraftfahrzeug, umfassend ein vollautomatisches, zur unabhängigen Fahrzeugführung ausgebildetes Fahrerassistenzsystem mit einem zu dessen Betrieb ausgebildeten Steuergerät, welches zur Durchführung des erfindungsgemäßen Verfahrens ausgebildet ist. Es ist demnach auch beim erfindungsgemäßen Kraftfahrzeug ein Plausibilitätsüberwachungsmodul vorgesehen, welches das Vorliegen von Fehlerfällen durch Auswertung von Egodaten und Umfelddaten detektieren und somit einen Aktionsplan auslösen kann. Mithin werden auch mit dem erfindungsgemäßen Kraftfahrzeug die Vorteile des erfindungsgemäßen Verfahrens erreicht. Sämtliche Ausführungen bezüglich des erfindungsgemäßen Verfahrens lassen sich analog auf das erfindungsgemäße Kraftfahrzeug übertragen.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein erfindungsgemäßes Kraftfahrzeug,
- Fig. 2: einen ersten, Vorüberlegungen zum erfindungsgemäßen Verfahren illustrierenden Graphen,
- Fig. 3: einen zweiten, Vorüberlegungen zum erfindungsgemäßen Verfahren beschreibenden Graphen,
- Fig. 4: einen Ablaufplan des erfindungsgemäßen Verfahrens,
- Fig. 5: eine Erreichbarkeitsmenge aufgrund der Fahrdynamik,
- Fig. 6: eine tatsächliche Erreichbarkeitsmenge unter Berücksichtigung von Umgebungsdaten,
- Fig. 7: eine Illustration zum Sicherheitskokonalgorithmus,
- Fig. 8: eine Illustration zum Zeitlückenalgorithmus, und
- Fig. 9: einen möglichen Aktionsplan.

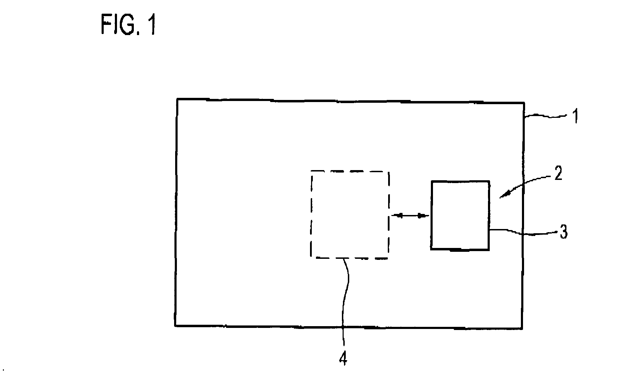

Fig. 1 zeigt die Prinzipskizze eines erfindungsgemäßen Kraftfahrzeugs 1. Es umfasst ein vollautomatisches Fahrerassistenzsystem 2 mit einem Steuergerät 3, das zu dessen Betrieb und auch zur Durchführung des erfindungsgemäßen Verfahrens ausgebildet ist. Es sei an dieser Stelle angemerkt, dass zur Durchführung des erfindungsgemäßen Verfahrens zur besseren Trennung selbstverständlich auch ein zusätzliches oder anderes Steuergerät ausgebildet werden kann.

Das Steuergerät 3 ist zusätzlich dazu ausgebildet, mit weiteren Fahrzeugsystemen, angedeutet bei 4, zu kommunizieren. So umfasst das Kraftfahrzeug verschiedene Sensoren zur Messung der Fahrdynamik und des Umfelds, verschiedene weitere Fahrzeugsysteme, unter anderem ein Lenksystem und ein Bremssystem, und auch weitere Fahrerassistenzsysteme, beispielsweise ein Navigationssystem. Auf deren Daten kann das Steuergerät 3 beispielsweise über ein Bus-System, insbesondere einen CAN-Bus, ebenso zugreifen, um das erfindungsgemäße Verfahren ausführen zu können, welches den aktuellen Betriebszustand des Kraftfahrzeugs beschreibende Egodaten und Umfelddaten als ausschließliche Eingangsdaten benötigt. Dabei werden exakt dieselben Eingangsdaten verwendet, die auch das Fahrerassistenzsystem 2 zur Ermittlung seiner zur Fahrzeugführung durchgeführten Fahreingriffe verwendet.

Zur Durchführung des erfindungsgemäßen Verfahrens ist ein Plausibilitätsüberwachungsmodul in dem Steuergerät 3 realisiert, welches jeweils bestimmten Fehlerfällen zugeordnete Algorithmen zur Auswertung der Egodaten und Umfelddaten verwendet, um zu überprüfen, ob wenigstens ein im Hinblick auf die Funktion des Fahrerassistenzsystems ausgeschlossener Fehlerfall vorliegt. Bei Vorliegen eines Fehlerfalls wird ein Aktionsplan ausgeführt, der wenigstens einen zur Überführung des Kraftfahrzeugs in einen sicheren Zustand dienenden Fahreingriff umfasst. Auf diesen wird später noch genauer eingegangen.

Bevor näher auf die Vorüberlegungen zur speziellen Ausgestaltung in den hier beschriebenen Ausführungsbeispielen eingegangen wird, sie noch darauf hingewiesen, dass in diesen Ausführungsbeispielen auch sichergestellt werden soll, dass die Sensoren beziehungsweise Fahrzeugsysteme 4 verlässliche Daten liefern, welche eine Grundlage des erfindungsgemäßen Verfahrens darstellen. Entsprechend sind die Sensoren im vorliegenden Beispiel redundant ausgeführt, und es erfolgt ein Abgleich zwischen redundante Daten liefernden Sensoren durch ein den entsprechenden Sensoren beziehungsweise Fahrzeugsystemen 4 zugeordnetes Funktionsüberprüfungsmodul. Derartiges ist im Stand der Technik grundsätzlich bekannt und muss hier nicht näher dargelegt werden.

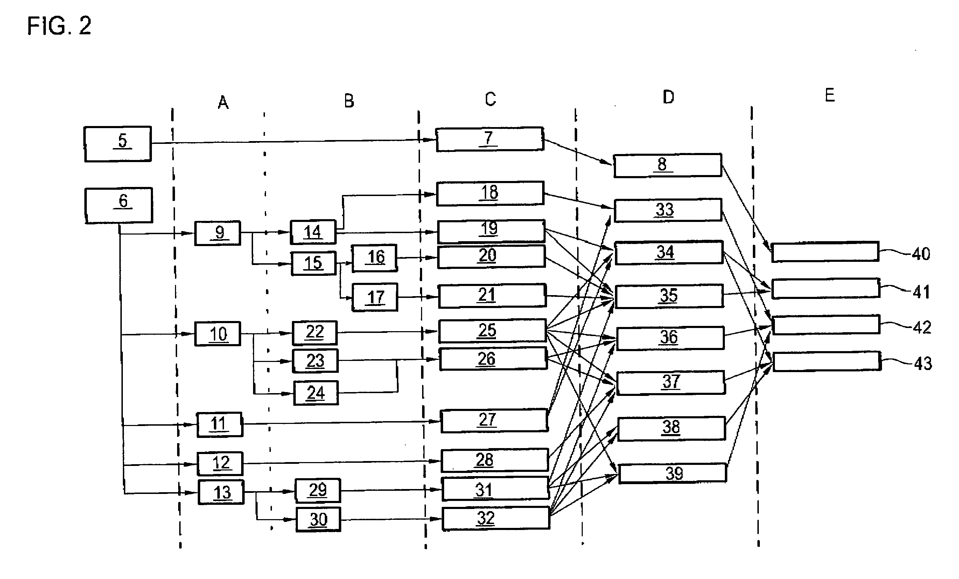

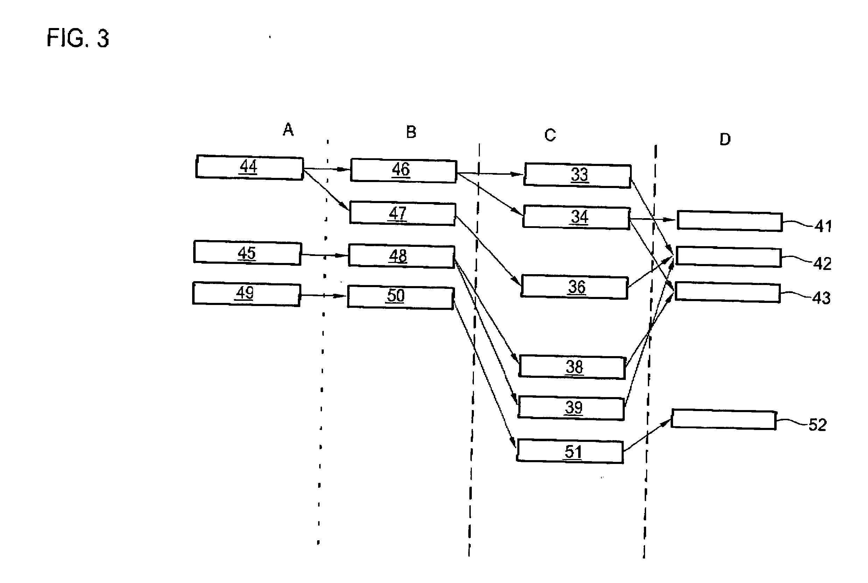

Bevor nun näher auf die konkret verwendeten Algorithmen im erfindungsgemäßen Verfahren und den Ablaufplan des erfindungsgemäßen Verfahrens eingegangen wird, seien zunächst die zu dieser speziellen Ausgestaltung, die besonders vorteilhaft für ein Stauassistenzsystem realisierbar ist, führenden Vorüberlegungen mit Hilfe der Figuren 2 und 3 näher dargelegt. Fig. 2 betrifft tatsächliche zu analysierende Fehlerfälle des Fahrerassistenzsystems 2, hier eines Stauassistenzsystems. Die Kästen markieren dabei jeweils spezielle Fälle und Gruppen. Die Grundidee ist dabei, zunächst das zu erwartende Verhalten des Fahrerassistenzsystems, wie es sich durch die vorgenommene Fahrzeugführungseingriffe in den aktuellen Egodaten widerspiegelt, selbstverständlich in Relation zu den Umfelddaten betrachtet, möglichst vollständig zu erfassen, um dann zu überlegen, welchen verallgemeinerten Fehlerfällen eine Abweichung vom erwarteten Verhalten zuzuordnen sein kann.

Ausgegangen wird in diesen Überlegungen von einer das Verhalten des Kraftfahrzeugs an sich betreffenden Situationsgruppe 5 und einer das Verhalten des Kraftfahrzeug 1 bezüglich anderer Objekte betrachtende Situationsgruppe 6. Ersichtlich ist für das Stauassistenzsystem in Fig, 2 der Situationsgruppe 5 nur eine Situation in der Spalte C für erwartetes Verhalten zugeordnet, gekennzeichnet durch den Kasten 7: "Das Kraftfahrzeug fährt innerhalb seiner erlaubten Geschwindigkeitsgrenzen". Der zugeordnete Fehlerfall, Spalte D, wäre hier der Fehlerfall 8: "Das Kraftfahrzeug fährt zu schnell oder rückwärts".

Bezüglich des Verhaltens des Kraftfahrzeugs bezüglich anderer Objekte, Situationsgruppe 6, werden noch verschiedene Situationsaspekte, Spalte A, und verschiedene Ausprägungen, Spalte B, unterschieden. Die Situationsaspekte in der Spalte A geben letztlich wieder, bezüglich welchen Objekts das Verhalten des Kraftfahrzeugs betrachtet wird, vorliegend die Situationsaspekte 9: "Verhalten bezüglich eines Vorderfahrzeugs", 10: "Verhalten bezüglich eines Nebenfahrzeugs", 11: "Verhalten bezüglich eines einscherenden Fahrzeugs", 12: "Verhalten bezüglich der aktuellen Fahrspur", und 13: "Verhalten bezüglich eines statischen Hindernisses".

Die Spalte B betrifft nun bestimmte Ausprägungen. So betrifft die Ausprägung 14 ein normal fahrendes Vorderfahrzeug, die Ausprägung 15 ein ausscherendes Vorderfahrzeug mit den Unterausprägungen 16 und 17, nämlich dass ein weiteres Vorderfahrzeug existiert, Ausprägung 16, und dass kein weiteres Vorderfahrzeug existiert, Ausprägung 17.

Hieraus ergibt sich dann jeweils, vgl. die Zeile, das erwartete Verhalten in Spalte C, beispielsweise das Verhalten 18: "Das Kraftfahrzeug hält den Sensor-Mindesabstand ein", das Verhalten 19: "Das Kraftfahrzeug regelt die Geschwindigkeit auf die Zeitlücke zum Vorderfahrzeug", das Verhalten 20: "Das Kraftfahrzeug regelt die Geschwindigkeit auf die Zeitlücke zu dem neuen Vorderfahrzeug", und das Verhalten 21: "Das als Stauassistenzsystem ausgeführte Fahrerassistenzsystem deaktiviert sich".

Ähnlich wird bezüglich des Nebenfahrzeugs aufgeteilt. Gemäß Ausprägung 22 kann das Nebenfahrzeug normal fahren, gemäß Ausprägung 23 übertritt es die Spurmarkierungen und gemäß Ausprägung 24 kommt es dem eigenen Kraftfahrzeug zu nahe. Hieraus resultiert gemäß der Pfeile in Fig. 2 das erwartete Verhalten 25: "Keine besondere Reaktion auf normal fahrendes Nebenfahrzeug" oder das Verhalten 26: "Das Kraftfahrzeug hält den lateralen Sicherheitsabstand zum Nebenfahrzeug und bleibt in seiner aktuellen Fahrspur".

Bezüglich des Einscherers, Aspekt 11, ist nur das Verhalten 27: "Das Kraftfahrzeug regelt rechtzeitig auf das einscherende Kraftfahrzeug" zu betrachten. Auch bezüglich des Aspekts 12, der aktuellen Fahrspur, ist nur das Verhalten 28: "Das Kraftfahrzeug fährt nur innerhalb der eigenen Fahrspur" zu berücksichtigen.

Bezüglich eines statischen Hindernisses, Aspekt 13, wird zwischen den Situationsausprägungen 29: "Das Hindernis ist umfahrbar" und 30: "Das Hindernis ist nicht umfahrbar" unterschieden. Entsprechend stellt sich das erwartete Verhalten 31: "Das Kraftfahrzeug fährt an dem statischen Hindernis vorbei" oder 32: "Das Kraftfahrzeug bremst auf das statische Hindernis" ein.

Aus den erwarteten Verhaltungsmöglichkeiten in Spalte C resultieren bestimmte Fehler. Diese können gemäß der von Spalte C zu Spalte D angeordneten Pfeile bestimmten Fehlergruppen zugeordnet werden, hier den Fehlergruppen 33 bis 39, da der Fehlerfall 8 nur für das Verhalten 7 relevant ist. Diese Fehlerfälle sind:
- "Das Kraftfahrzeug unterscheidet den Sensormindestabstand" (Fehlerfall 33)
- "Das Kraftfahrzeug kommt einem Vorderfahrzeug longitudinal zu nahe" (Fehlerfall 34)
- "Das Kraftfahrzeug lässt zu viel Abstand zu einem Vorderfahrzeug" (Fehlerfall 35)
- "Das Kraftfahrzeug kommt einem dynamischen Hindernis lateral zu nahe" (Fehlerfall 36)
- "Das Kraftfahrzeug verlässt die aktuelle Fahrspur" (Fehlerfall 37)
- "Das Kraftfahrzeug kommt einem statischen Hindernis longitudinal zu nahe" (Fehlerfall 38)
- "Das Kraftfahrzeug kommt einem statischen Hindernis lateral zu nahe" (Fehlerfall 39).

In der Spalte E sind nun im erfindungsgemäßen Verfahren verwendete Algorithmen, hier vier Algorithmen 40 bis 43, vorgesehen, die alle diese Fehlerfälle vollständig abdecken, nämlich ein Geschwindigkeitsgrenzenalgorithmus 40, ein Zeitlückenalgorithmus 41, ein Sicherheitskokonalgorithmus 42 und eine Ausweichanalyse 43. Die Pfeile zwischen den Spalten D und E zeigen dabei auf, welcher der Fehlerfälle 8, 33 - 39 welchem der Algorithmen 40 - 43 zugeordnet ist, das bedeutet, welchen Fehlerfall jeweils welcher Algorithmus 40 - 43 detektieren kann. Ersichtlich ermöglichen die in Spalte E gezeigten vier Algorithmen Geschwindigkeitsgrenzenalgorithmus 40, Zeitlückenalgorithmus 41, Sicherheitskokonalgorithmus 42 und Ausweichanalyse 43 eine vollständige Abdeckung der Fehlerfälle.

Doch, wie Fig. 3 aufzeigen soll, auch durch andere Verkehrsteilnehmer oder Vorkommnisse ausgelöste Fehlerfälle können über die Algorithmen abgedeckt werden, hier hauptsächlich die Algorithmen 41 - 43, die wiederum in Spalte D der Fig. 3 gezeigt sind. Situationsaspekte solcher fremd verschuldeter Fehlerfälle sind in Spalte A dargelegt, beispielsweise der Aspekt 44: "Ausgelöst durch ein dynamisches Objekt" oder der Aspekt 45: "Ausgelöst durch oder manifestiert als statisches Hindernis".

Ausprägungen sind wiederum in Spalte B dargestellt. So sind unter den Ausprägungen 46 beispielsweise eine Vollbremsung eines Vorderfahrzeugs oder ein extrem nahe einscherendes Fahrzeug subsumiert. Die Ausprägungen 47 umfassen beispielsweise einen Motorradfahrer oder einen Krankenwagen zwischen den Kolonnenspuren. Ausprägungen 48 bezüglich des Aspekts 45 können verlorene Ladung oder ein umstürzender Baum sein.

Ersichtlich können die dargestellten Ausprägungen den bereits aus Fig. 2 bekannten Fehlerfällen 33, 34, 36, 38 und 39 zugeordnet werden, welche wie bekannt durch die Algorithmen 41 bis 43 abgedeckt werden. Auch fremd verschuldete Fehlerfälle werden mithin im erfindungsgemäßen Verfahren erfasst.

Wie ebenso in Fig. 3 dargestellt, betrifft das erfindungsgemäße Verfahren in dieser Ausgestaltung auch einen weiteren wichtigen Situationsaspekt, nämlich den Aspekt 49: "Menschen auf der Fahrbahn", der beispielsweise in den Ausprägungen 50: "Bauarbeiter", "Polizist", "Stauhelfer" und dergleichen vorgesehen sein kann. Hieraus ergibt sich ein weiterer Fehlerfall 51: "Personen auf der aktuellen Fahrspur", der zur Sicherheit zu einer Deaktivierung des Stauassistenzsystems führen kann. Hierzu wird im erfindungsgemäßen Verfahren der zusätzliche Personenerkennungsalgorithmus 52 verwendet.

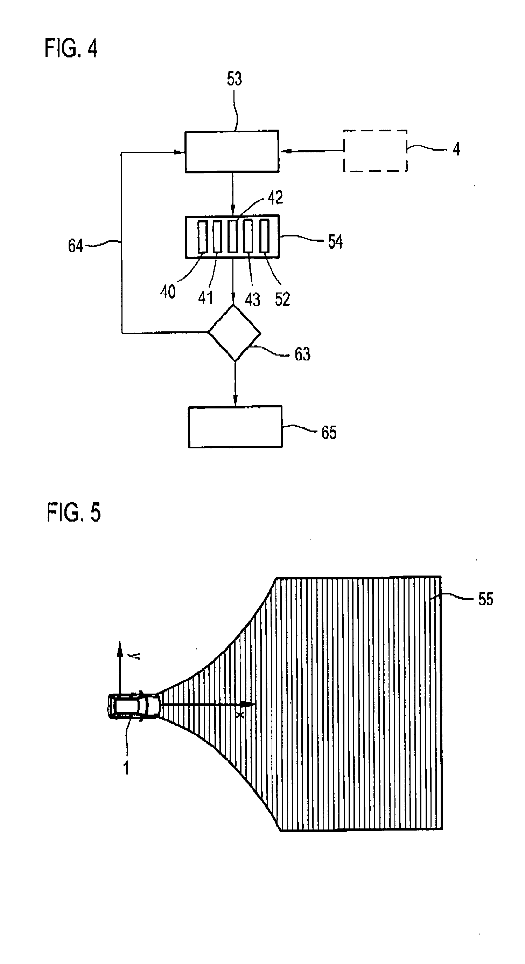

Fig. 4 zeigt einen Ablaufplan des erfindungsgemäßen Verfahrens. Ist das Fahrerassistenzsystem 2 aktiv, so werden in jedem Zeitschritt von den Fahrzeugsystemen 4 in einem Schritt 53 die Eingangsdaten, also die Egodaten, und die Umgebungsdaten, welche vorliegend Daten des statischen Umfelds, Daten des dynamischen Umfelds und Fahrspurdaten umfassen, empfangen. Diese Eingangsdaten dienen in einem Schritt 54 als Eingangsdaten für die Algorithmen 40 bis 43, 52, wobei sie gegebenenfalls noch aufbereitet werden.

Dazu sei zunächst festgehalten, dass im hier dargestellten Ausführungsbeispiel die Umfelddaten allgemein so aufbereitet werden, dass sie als ein Umfeldmodell, konkret ein eine Belegungskarte umfassendes Umfeldmodell, vorliegen. In einer Belegungskarte wird jedem Ort der Umgebung, beispielsweise bei einem Belegungsgitter den entsprechenden Bereichen, zugeordnet, ob dieser Ort frei, durch ein Objekt belegt oder als unbekannt markiert ist, wobei im letzten Fall beispielsweise von dort, insbesondere aufgrund einer Abschirmung, keine Messdaten vorliegen. Den Orten können dann selbstverständlich auch weitere Zusatzinformationen zugeordnet sein, wie dies im Stand der Technik grundsätzlich bekannt ist. Ein solches Umfeldmodell kann also auch für das erfindungsgemäße Verfahren verwendet werden.

Im Folgenden seien nun die Arbeitsweisen der Algorithmen 40 bis 43, 52, näher erläutert, wobei mit dem Geschwindigkeitsgrenzenalgorithmus 40 begonnen wird.

Der Geschwindigkeitsgrenzenalgorithmus 40 ist relativ einfach implementiert. Er vergleicht im vorliegenden, ein Stauassistenzsystem betreffendes Beispiel die aktuelle Geschwindigkeit des Kraftfahrzeugs 1 mit den Grenzen des erlaubten Geschwindigkeitsintervalls, hier 0 km/h und 60 km/h. Liegt die Geschwindigkeit außerhalb der Grenzen, liegt ein Fehlerfall vor, nämlich der Fehlerfall 8.

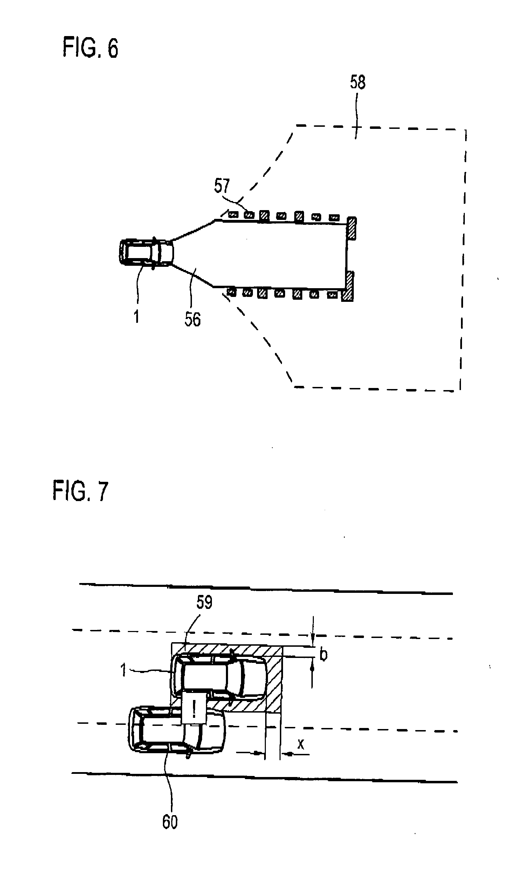

Die Figuren 5 und 6 zeigen Illustrationen zur Erläuterung der Ausweichanalyse. Im Rahmen dieser wird in einem ersten Schritt eine tatsächliche Erreichbarkeitsmenge 55 ermittelt, also die Menge der grundsätzlich aufgrund der fahrdynamischen Eigenschaften (Kammscher Kreis und dergleichen) erreichbaren Punkte im Umfeld des Kraftfahrzeugs. Dies ist in Fig. 5 dargestellt; dabei zeigt die x-Richtung die aktuelle Fahrtrichtung des Kraftfahrzeugs 1 an. Ob ein Ort der theoretischen Erreichbarkeitsmenge 55 aber tatsächlich erreicht werden kann, bestimmt sich durch die Objekte in der Umgebung. Hierzu wird nun die Belegungskarte des Umfeldmodells über die theoretische Erreichbarkeitsmenge 55 gelegt, wobei die Daten der Belegungskarte dabei allerdings in zweifacher Hinsicht vorbearbeitet wurden. Zum einen werden als unbekannt markierte Orte als belegt gekennzeichnet, zum anderen werden auch aller außerhalb der aktuellen Spur liegenden Orte als belegt markiert.

Es ergibt sich als tatsächliche Erreichbarkeitsmenge 56 der in Fig. 6 nicht gekennzeichnete Bereich. Die ausgefüllten Blöcke 57 symbolisieren dabei Umgebungsobjekte, also grundsätzlich belegte Bereiche, während gestrichelt ein aus anderen Gründen als belegt markierter Bereich 58 dargestellt ist (beispielsweise weil von hier keine Sensordaten vorliegen - "unbekannt" - oder der Ort außerhalb der aktuell befahrenen Fahrspur liegt).

In der tatsächlichen Erreichbarkeitsmenge 56 wird nun nach dem längsten freien Weg gesucht. Dieser Weg wird anschließend mit dem minimalen Bremsweg einer Notbremsung, der mit der aktuellen Geschwindigkeit und den aktuellen Bedingungen benötigt wird, verglichen. Dabei kann auch ein Sicherheitsabstand mit einfließen. Unterschreitet der freie Weg diesen minimalen Bremsweg plus Sicherheitsabstand, so liegt ein Fehlerfall vor.

Dies Ausweichanalyse 43 deckt jedoch nicht die Fälle ab, in denen das Kraftfahrzeug 1 seitlich zu nah an einem Hindernis, also einem statischen Objekt, vorbeifährt, oder in denen dynamische Objekte dem eigenen Fahrzeug zu nahe kommen. Weiterhin wird nicht der Sensormindestabstand (häufig auch als Sensorlücke bezeichnete Bereich, in dem keine Messung der Abstandssensoren zum Vorderfahrzeug erfolgt) berücksichtigt. Hierzu wird nun der Sicherheitskokonalgorithmus verwendet. Dabei wird alternativ zum Kraftfahrzeug 1 ein Sicherheitskokon 59, vgl. Fig. 7, eingeführt, der eine bestimmte Breite b neben dem Kraftfahrzeug 1 einnimmt, beispielsweise 50 cm, und dessen Erstreckung x vor dem Kraftfahrzeug dem Sensormindestabstand entspricht. Ist der Sicherheitskokon 59 nicht frei, befindet sich also ein statisches oder dynamisches Objekt, hier das Nebenfahrzeug 60, innerhalb dieses Bereichs, so liegt ein Fehlerfall vor. Dabei ist zu beachten, dass in der Belegungskarte für den Sicherheitskokonalgorithmus 42 unbekannte Gebiete als belegt gekennzeichnet werden. Damit jedoch kein Fehlerfall erkannt wird, wenn an den Rand der aktuellen Fahrspur gefahren wird, werden Gebiete außerhalb der aktuellen Fahrspur nicht verändert.

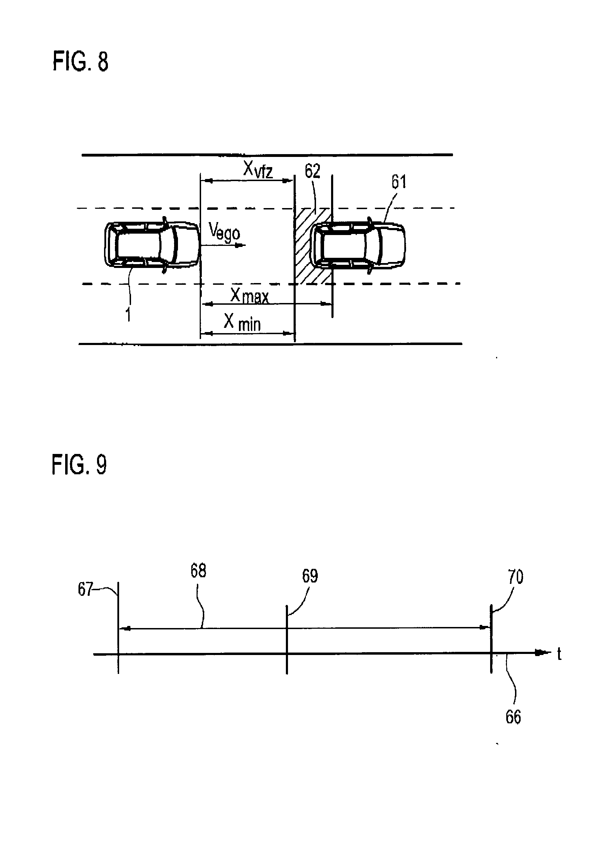

Der Zeitlückenalgorithmus 41 detektiert letztlich, ob einem Vorderfahrzeug 61 noch korrekt gefolgt wird. Hierzu wird überprüft, ob sich die aktuell gemessene Zeitlücke zu dem Vorderfahrzeug 61 innerhalb eines bestimmten Zeitlückenintervalls 62 befindet. Die Zeitlücke ist dabei definiert als der Quotient zwischen dem Abstand zum Vorderfahrzeug 61 und der aktuellen Geschwindigkeit des Kraftfahrzeugs 1, in Fig. 8 als V_{ego} bezeichnet. Ersichtlich befindet sich in der in Fig. 8 dargestellten Situation die aktuelle Zeitlücke X_{vsz} in dem intervall 62 zwischen der Zeitlücke Xₘₐₓ und der Zeitlücke Xₘᵢₙ.

Dabei darf im vorliegenden Fall ein kurzfristiges Überschreiten von Xₘₐₓ beziehungsweise ein kurzfristiges Unterschreiten von Xₘᵢₙ auftreten, weshalb die Überprüfung der Zeitlücke mit einer Hysterese versehen wird.

Für den Personenerkennungsalgorithmus 52 wird ein üblicher, bekannter Algorithmus zur Detektion von Personen auf der eigenen Fahrspur verwendet, der hier nicht näher erläutert werden soll.

In einem Schritt 63 (Fig. 4) wird dann überprüft, ob ein Fehlerfall vorliegt. Liegt kein Fehlerfall vor, so wird, vgl. Pfeil 64, im nächsten Zeitschritt wieder mit Schritt 53 fortgefahren. Liegt jedoch ein Fehlerfall vor, so wird in einem Schritt 65 abhängig von dem Fehlerfall gegebenenfalls unter Berücksichtigung weiterer, die aktuelle Situation beschreibender Daten ein Aktionsplan aus einer Mehrzahl von Aktionsplänen ausgewählt und angepasst, um das Kraftfahrzeug 1 unter Deaktivierung des Fahrerassistenzsystems 2 möglichst schnell in einen sicheren Zustand, hier den Stillstand, zu überführen.

Dabei soll hier nur ein Beispiel für einen derartigen Aktionsplan in Fig. 9 dargestellt werden, nämlich der sogenannte Komfortbremsplan. Eine Achse 66 deutet den Zeitverlauf an. Zu einem Zeitpunkt 67 wurde ein Fehlerfall festgestellt, das bedeutet, der Aktionsplan beginnt. Im vorliegenden Fall der Fig. 9 wird dann unmittelbar eine Fahrerübernahmeaufforderung ausgegeben. Dies geschieht durch entsprechende Steuerungsbefehle an wenigstens eine optische und/oder akustische und/oder haptische Anzeigevorrichtung des Kraftfahrzeugs 1. Daraufhin wird für eine vorgegebene Zeitspanne 68 gewartet. Ist diese abgelaufen, ohne dass der Fahrer die Kontrolle über das Kraftfahrzeug 1 übernommen hat, werden zu einem Zeitpunkt 69 mehrere Steuerungsbefehle ausgeführt. Zum einen wird die Warnblinkanlage des Kraftfahrzeugs 1 aktiviert, um andere Verkehrsteilnehmer zu warnen. Zum anderen setzt eine Bremsung mit einer vorbestimmten Bremsverzögerung ein, das bedeutet, es wird ein Längsführungseingriff, hier ein Bremseingriff mit einer bestimmten Bremsverzögerung, vorgenommen. Dieser hält an, bis zu einem Zeitpunkt 70 das Kraftfahrzeug stillsteht, mithin der sichere Zustand erreicht ist. Dabei kann hier eine moderate Bremsverzögerung gewählt werden, die das Kraftfahrzeug 1 komfortabel in den Stillstand bewegt.

Es sei an dieser Stelle daraufhingewiesen, dass keine konstante Bremsverzögerung vorgesehen sein muss, sondern sich dieser auch über die Zeit verändern kann. Insbesondere kann es vorteilhaft sein, eine kurze Zeit eine hohe Bremsverzögerung anzusetzen (Bremsruck), um den Fahrer verstärkt auf die geänderte Situation und die Aktivierung des Fahrerassistenzsystems 2 hinzuweisen, denn auch nach dem Zeitpunkt 69 besteht für den Fahrer noch die Möglichkeit, die Kontrolle über das Kraftfahrzeug 1 durch Fahrübernahme zu übernehmen. Der Komfortbremsplan kann beispielsweise eingesetzt werden, wenn der Fehlerfall und/oder sonstige berücksichtigte Daten anzeigen, dass die Situation nicht kritisch ist.

Auch kann ein Notbremsplan, der ausgeführt werden kann, wenn eine hochgradig kritische Situation gegeben ist, beispielsweise ein deutlich zu geringer Abstand zu einem Vorderfahrzeug festgestellt wird oder dergleichen, verwendet werden. Denkbar ist es, grundsätzlich beim erfindungsgemäßen Verfahren den Notbremsplan zu wählen, um eine größtmögliche Sicherheit zu erhalten. Dabei kann, gegebenenfalls zusätzlich zu einer Fahrerübernahmeaufforderung, die Warnblinkanlage und das Signalhorn des Kraftfahrzeugs 1 aktiviert werden, wobei gleichzeitig ein Bremsvorgang mit der maximal möglichen Bremsverzögerung stattfindet. Es kann jedoch durchaus berücksichtigt werden, dass ein dicht auffahrendes Folgefahrzeug oder dergleichen detektiert wurde; in diesem Fall kann auch im Notbremsplan eine Bremsverzögerung gewählt werden, die etwas kleiner als die maximal mögliche Bremsverzögerung ist.

Denkbar ist als Aktionsplan auch ein Zielbremsplan, dessen Grundidee darin besteht, dass in vielen Situationen frühzeitig festgestellt werden kann, in welchem Abstand zum aktuellen Ort des Kraftfahrzeugs 1 das Kraftfahrzeug 1 spätestens zum Stillstand gekommen sein sollte. Entsprechend kann beispielsweise die Sollbremsverzögerung angepasst werden oder dergleichen. Auch Querrückfallebenen können über den Aktionsplan realisiert werden.

Es sei abschließend noch daraufhingewiesen, dass die Aktionspläne natürlich auch dann eingesetzt werden können, wenn bei Eigendiagnosemodulen des Fahrerassistenzsystems 2 festgestellt wird, dass eine Systemgrenze erreicht wird.

Das das Fahrerassistenzsystem 2 aufgrund von den Auswirkungen auf das Kraftfahrzeug beurteilende Plausibilitätsüberwachungsmodul ist mithin zusätzlich zu bereits vorhanden Modulen, die Systemgrenzen überwachen, vorgesehen. So wird eine erhöhte Sicherheit insbesondere ein autonomes Fahrerassistenzsystem, erreicht.

## Patentansprüche

1. Verfahren zur Steuerung des Betriebs eines vollautomatischen, zur unabhängigen Fahrzeugführung ausgebildeten Fahrerassistenzsystems eines Kraftfahrzeugs,
**dadurch gekennzeichnet,**
**dass** ein Plausibilitätsüberwachungsmodul unter insbesondere ausschließlicher Berücksichtigung von von wenigstens einem Sensor und/oder Fahrzeugsystem ermittelten, den aktuellen Betriebszustand des Kraftfahrzeugs beschreibenden Egodaten und Umfelddaten, insbesondere von den auch zur Ermittlung der Fahrzeugsführungsaktionen des Fahrerassistenzsystems verwendeten Eingangsdaten, überprüft, ob wenigstens ein im Hinblick auf die Funktion des Fahrerassistenzsystems ausgeschlossener Fehlerfall vorliegt, wobei bei Vorliegen eines Fehlerfalls ein wenigstens einen zur Überführung des Kraftfahrzeugs in einen sicheren Zustand, insbesondere den Stillstand, dienenden Fahreingriff umfassender Aktionsplan, der einen zeitlichen Ablauf von Steuerungsbefehlen für Fahrzeugsysteme enthält, ausgeführt wird.

2. Verfahren nach Anspruch 1, **dadurch gekennzeichnet, dass** der Aktionsplan unter Berücksichtigung des Fehlerfalls aus einer Anzahl fest vorgegebener Aktionspläne gewählt und/oder angepasst wird.

3. Verfahren nach Anspruch 1 oder 2, **dadurch gekennzeichnet, dass** ein wenigstens einem Sensor und/oder Fahrzeugsystem bezüglich der Datenerfassung zugeordnetes Funktionsüberprüfungsmodul verwendet wird, insbesondere wenigstens ein Sensor redundant ausgeführt ist.

4. Verfahren nach einem der vorangehenden Ansprüche, **dadurch gekennzeichnet, dass** als Umfelddaten Daten des statischen Umfelds und/oder Daten des dynamischen Umfelds und/oder Fahrspurdaten verwendet werden.

5. Verfahren nach einem der vorangehenden Ansprüche, **dadurch gekennzeichnet, dass** zur Überprüfung des Vorliegens eines Fehlerfalls wenigstens ein wenigstens einen Fehlerfall abdeckender Algorithmus zur Datenauswertung verwendet wird.

6. Verfahren nach Anspruch 5, **dadurch gekennzeichnet, dass** als Algorithmus eine Ausweichanalyse verwendet wird, bei welcher die Existenz einer Trajektorie, auf der ohne Kollision zum Stillstand gebremst werden kann, überprüft wird.

7. Verfahren nach Anspruch 5 oder 6, **dadurch gekennzeichnet, dass** als Algorithmus ein Sicherheitskokonalgorithmus verwendet wird, in dem überprüft wird, ob ein definiertes, um das Kraftfahrzeug befindliches Gebiet frei von Objekten ist.

8. Verfahren nach Anspruch 6 oder 7, **dadurch gekennzeichnet, dass** ein Orte als durch ein Objekt belegt, unbekannt oder frei klassifizierendes Umgebungsmodell verwendet wird, in dem außerhalb der aktuellen Fahrspur des Kraftfahrzeugs liegende und/oder als unbekannt klassifizierte Orte für die Zwecke der Ausweichanalyse als belegt gekennzeichnet werden und/oder als unbekannt klassifizierte Bereiche für die Zwecke des Sicherheitskokonalgorithmus als belegt gekennzeichnet werden.

9. Verfahren nach einem der Ansprüche 5 bis 8, **dadurch gekennzeichnet, dass** als Algorithmus ein Zeitlückenalgorithmus verwendet wird, wobei überprüft wird, ob sich ein Vorderfahrzeug des Kraftfahrzeugs in einem bestimmten Zeitlückenintervall befindet.

10. Verfahren nach Anspruch 9, **dadurch gekennzeichnet, dass** zum Erlauben eines kurzfristigen Verlassens des Zeitlückenintervalls die Überprüfung der Zeitlücke mit einer Hysterese versehen wird.

11. Verfahren nach einem der Ansprüche 5 bis 10, **dadurch gekennzeichnet, dass** als Algorithmus ein Geschwindigkeitsgrenzenalgorithmus vorgesehen ist, welcher überprüft, ob das Kraftfahrzeug innerhalb eines definierten Geschwindigkeitsintervalls fährt.

12. Verfahren nach einem der Ansprüche 5 bis 11, **dadurch gekennzeichnet, dass** als Algorithmus ein Personenerkennungsalgorithmus verwendet wird, der auf der aktuellen Fahrspur des Kraftfahrzeugs befindliche Personen erkennt.

13. Kraftfahrzeug (1), umfassend ein vollautomatisches, zur unabhängigen Fahrzeugführung ausgebildetes Fahrerassistenzsystem (2) mit einem zu dessen Betrieb ausgebildeten Steuergerät (3), ausgebildet zur Durchführung des Verfahrens nach einem der vorangehenden Ansprüche.
